# FASCICULE DE BREVET EUROPEEN

(11) **EP 0 577 442 B1**
(45) Date de publication et mention de la délivrance du brevet: **03.01.1996**
(21) Numéro de dépôt: 93401209.7
(22) Date de dépôt: 12.05.1993
(51) Int. Cl.: B60R 13/10

(54) **Procédé et dispositif pour la fabrication de plaques minéralogiques notamment réflechissantes**
Verfahren und Vorrichtung zum Herstellen von Kennzeichen, insbesondere Reflektierkennzeichen
Method and means of manufacturing number plates, in particular reflecting number plates

(30) Priorité: 14.05.1992 FR 9205862
(43) Date de publication de la demande: 05.01.1994
(73) Titulaire: Société Anonyme dite: FABRICAUTO, F-71008 Macon Cedex (FR)
(72) Inventeur: Henry, René, F-71250 Cluny (FR)
(74) Mandataire: Jolly, Jean-Pierre

(56) Documents cités:
- DE-A- 3 140 115
- DE-U- 8 902 705
- FR-A- 2 627 615
- GB-A- 2 227 348

## Description

L'invention concerne un procédé et un dispositif pour la fabrication de plaques minéralogiques pour l'immatriculation des véhicules automobiles notamment. Elle concerne en particulier les plaques minéralogiques de type dites à doubles plaques et à profil réfléchissant ou réflectorisées.

Les plaques d'immatriculation, dites à doubles plaques, à fond noir et caractères blancs ou aluminium sont bien connues. Ces plaques sont obtenues par assemblage en une opération de semi-découpe d'une plaque épaisse support en aluminium et d'une plaque fine de surface également en aluminium et portant la couleur du fond. La formation des caractères est effectuée ultérieurement à façon par les garagistes. L'opération de semi-découpe est effectuée à l'aide d'une presse à découper, les deux plaques-supports et de surface, prédécoupées aux dimensions de la plaque à réaliser, étant positionnées manuellement sur l'outil de presse et assemblées successivement à une cadence de 300 à 400 pièces par heure.

Pour la fabrication de plaques réflectorisées, on peut utiliser ce procédé de fabrication, la plaque fine noire de surface étant remplacée par une plaque revêtue d'un film réfléchissant. Cependant, un tel procédé comporte de nombreux inconvénients.

Tout d'abord, l'encastrement du bord périphérique de la plaque fine au sein de la plaque-support est mal assuré par le fait que cette plaque fine s'interpose entre la matrice et le poinçon de la presse, de sorte que son bord interne s'affine et s'arrondit avec préjudice sur la liaison d'encastrement des plaques.

Ensuite, l'opération de semi-découpe par l'effet de presse et d'étirement sur la plaque fine produit un allongement de celle-ci, qui se traduit par une déformation de la planéité de surface et donc un bombage de celle-ci sur la plaque-support, et par la formation de vagues entre les caractères formés ultérieurement.

En outre, l'utilisation obligée d'une plaque fine à la même dimension que la plaque-support pour l'opération de semi-découpe conduit à une perte de matière non négligeable, de l'ordre d'environ 12%. Cet inconvénient est accentué par le fait que le produit réfléchissant est relativement coûteux.

De plus, le produit réfléchissant du film revêtant la plaque fine de surface étant essentiellement constitué de billes microscopiques de verre, l'outillage de presse est sujet à une usure rapide. Le coût du réaffûtage des outils de semi-découpe est relativement important.

Enfin, la cadence de fabrication est limitée par le positionnement manuel des plaques avant semi-découpe.

L'invention vise à remédier à ces inconvénients en proposant un nouveau procédé de fabrication de plaques d'immatriculation de type à doubles plaques et notamment réflectorisées.

Par ailleurs, on connaît par GB-A-2 227 348 une plaque d'immatriculation dans laquelle une plaque de surface est simplement assemblée à une plaque-support dans un logement formé dans cette dernière. La plaque de surface est collée par sa surface inférieure (par un adhésif double-face) sur les portions de surface plane de la plaque-support.

L'invention propose un assemblage simplifié.

Le procédé de fabrication de plaques d'immatriculation selon l'invention est en effet caractérisé par les caractéristiques de la revendication 1.

L'assemblage de la plaque fine et de la plaque-support peut être obtenu par collage périphérique de la plaque fine sur la plaque-support par exemple suivant un filet de colle préalablement posé en bordure de la plaque fine.

La plaque fine est constituée d'un corps rectangulaire de faible épaisseur, en aluminium par exemple, et d'une couche réfléchissante de surface issue d'une bande adhésive appliquée sur le corps de la plaque fine.

De façon préférentielle, on effectue une semi-découpe de la plaque-support selon un gabarit équivalent au pourtour du corps de la plaque fine, selon une faible épaisseur, de valeur égale sensiblement à l'épaisseur de la plaque fine de surface et la couche ou bande adhésive réfléchissante de surface de la plaque fine dépasse du bord périphérique du corps, de sorte qu'elle peut être assemblée sur la plaque-support par simple adhésion périphérique externe de la partie émergente de la bande réfléchissante sur la surface correspondante de la plaque-support. La plaque fine ainsi assemblée par adhésion périphérique externe de la bande réfléchissante adhésive sur la plaque-support peut être avantageusement placée dans un second logement de la plaque-support, issu également de semi-découpe, et conformé aux dimensions de pourtour de la bande réfléchissante.

Le second logement peut être issu également d'un procédé de formage du bord par emboutissage.

Le second logement de la semi-découpe sert ainsi à encadrer la plaque fine de surface et sa bordure périphérique permet de rigidifier la plaque-support dont l'épaisseur peut-être ainsi réduite d'une valeur usuelle de 1,2 mm à 0,8 mm.

En outre, pour former une plaque selon cette disposition, on n'utilise plus d'outil de semi-découpe à conformation périphérique comme dans le procédé classique de confection des doubles plaques actuelles, mais des outils à lame simple pour effectuer une coupe à longueur des plaques-supports et des plaques fines à partir de leur bande d'alimentation respective. Ce type d'outil est beaucoup moins onéreux que les outils de semi-découpe précités.

Par ailleurs, dans un tel procédé, la cadence de production n'est plus limitée par le positionnement manuel des plaques avant l'assemblage du procédé classique actuel et peut être notablement augmentée en conformité avec les outils de manutention automatiques actuels permettant l'assemblage en continu des plaques fines et des plaques-supports sur une seule ligne de convoyage acheminant les plaques définitives.

L'invention concerne également les plaques obtenues par la mise en oeuvre du procédé défini ci-dessus.

On décrira ci-après un exemple de réalisation de l'invention en référence aux dessins annexés sur lesquels:

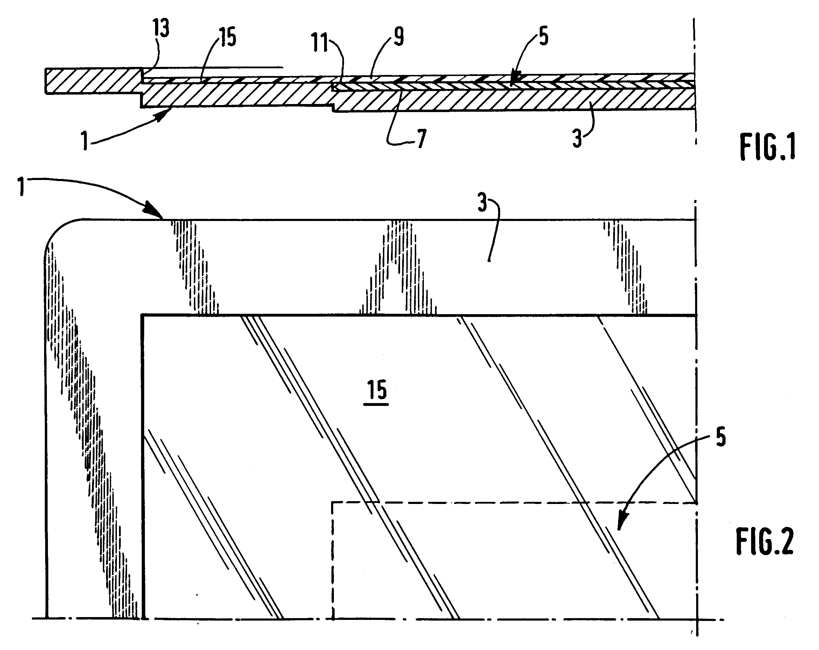

La figure 1 est une vue schématique en demi-coupe transversale selon un plan longitudinal médian d'une plaque d'immatriculation selon l'invention prête à être numérotée, et
La figure 2 est une vue correspondante partielle de dessus de cette plaque.

Le procédé de réalisation n'a pas été représenté. Il se déduit aisément de la structure de la plaque décrite ci-après.

Avec référence au dessin, une plaque d'immatriculation 1 selon l'invention est constituée d'une plaque-support 3 épaisse rectangulaire en aluminium de format 520 x 110 mm et d'épaisseur 0,8 mm et d'une plaque fine de surface 5 disposée dans la partie centrale de la plaque-support 3 et sur laquelle seront formés ultérieurement les caractères ou numéros de la plaque définitive 1. La plaque fine 5 est également rectangulaire, étant constituée d'un corps 7 en aluminium d'épaisseur 0,2 mm et d'une couche réfléchissante de surface 9 d'environ 0,1 mm d'épaisseur. Le corps 7 est rectangulaire de format 490 x 80 mm. La largeur du corps (80 mm) correspond à la hauteur exigée pour les numéros à former ultérieurement. La couche réfléchissante est une bande également rectangulaire, de format 510 x 100 mm, dépassant en périphérie du corps 7 d'une largeur de 10 mm. Cette bande est adhésive sur sa face opposée à la face réfléchissante de surface et est appliquée directement en adhésion sur la surface du corps.

La plaque fine est disposée sur la plaque-support de telle façon que son corps soit reçu dans un premier logement 11 de format complémentaire et d'épaisseur 0,2 mm (centré par rapport à la plaque-support) et que la bande réfléchissante de surface 9 soit disposée dans un second logement 13, de format plus grand que le premier et centré par rapport à ce dernier, de format complémentaire à celui de la couche réfléchissante. Ces logements 11 et 13 peuvent être obtenus par une opération classique de semi-découpe à la presse de la plaque-support, en deux opérations successives, ou même en une seule où les deux logements sont alors formés simultanément. La profondeur du second logement 13 est variable et est égale de préférence à 0,4 mm. La plaque fine est solidarisée à la plaque support par collage en périphérie par l'intermédiaire de sa couche réfléchissante dont la partie adhésive 15 qui dépasse du corps 7 (de 10 mm) est appliquée sur la surface correspondante du second logement de la plaque-support. La plaque fine de surface ainsi assemblée et dont le corps est simplement posé sur le fond du premier logement 11 facilite l'opération de numérotage ultérieur des caractères dont les parties de chute découpées seront enlevées sans difficulté.

Il est à noter que la fabrication d'une telle plaque peut être obtenue par un procédé en continu où les plaques-supports et plaques fines de surface sont issues de deux lignes de fabrication parallèles distinctes qui se rejoignent à l'assemblage de la plaque fine sur la plaque-support. Cet assemblage peut être réalisé par un bras manipulateur classique (non représenté) prélevant par succion les plaques fines, par exemple, et les positionnant précisément sur les plaques-supports, de même que par un cylindre perforé prélevant par succion les plaques fines et les libérant à une position précise sur les plaques-supports amenées tangentiellement après une rotation donnée.

On notera enfin à titre de variante possible que la plaque fine de surface peut être simplement déposée sur une plaque-support plane et retenue sur celle-ci par sa partie de bande réfléchissante adhésive 15 dépassant de son corps.

Les plaques obtenues garantissent un bon assemblage de la plaque de surface réfléchissante sur son support, facilitant la confection ultérieure des numéros, et optimisent l'utilisation des matières et notamment de la matière réfléchissante la plus coûteuse (sans perte). En outre, elle ne font appel qu'à des outils de coupe ou semi-découpe peu onéreux et évitent la limitation de la production à un positionnement manuel avant presse, comme dans le procédé classique actuel dit à doubles plaques.

## Revendications

1. Procédé de fabrication de plaques d'immatriculation, notamment de plaques de type dit à doubles plaques et réflectorisées, caractérisé en ce qu'il fait intervenir les étapes suivantes :
- la fabrication de plaques-supports brutes (3), découpées aux dimensions de la plaque à réaliser ;
- le traitement desdites plaques obtenues, de manière à former un logement (11) pour une seconde plaque ou la double plaque fine de surface (5) sur laquelle seront formés de façon classique les caractères de la plaque à réaliser;
- la fabrication desdites secondes plaques fines de surface (5) découpées aux dimensions dudit logement (11) formé sur la plaque-support, la plaque fine (5) étant constituée d'un corps rectangulaire (7) de faible épaisseur, en aluminium par exemple, et d'une couche réfléchissante de surface (9) issue d'une bande adhésive appliquée sur le corps de la plaque fine, la couche ou bande adhésive réfléchissante de surface (9) de la plaque fine dépassant du bord périphérique du corps, en (15), de sorte qu'elle peut être assemblée sur la plaque-support (3) par simple adhésion périphérique externe de la partie émergente (15) de la bande réfléchissante sur la surface correspondante de la plaque-support, le corps (7) étant reçu dans le logement (11), de manière à constituer une plaque (1) prête à être numérotée avant pose sur le véhicule.

2. Procédé de fabrication de plaques minéralogiques selon la revendication 1, caractérisé en ce que l'on effectue une semi-découpe de la plaque-support (3) selon un gabarit équivalent au pourtour du corps (7) de la plaque fine, selon une faible épaisseur, de valeur égale sensiblement à l'épaisseur de la plaque fine de surface, en ce que la plaque fine est assemblée par adhésion périphérique dans la plaque-support de telle manière que son corps (7) soit logé dans ledit logement issu de semi-découpe.

3. Procédé de fabrication de plaques minéralogiques selon l'une des revendications 1 et 2, caractérisé en ce que la plaque fine (5) ainsi assemblée par adhésion périphérique externe de la bande réfléchissante (9) adhésive sur la plaque-support (3) est placée dans un second logement (13) formé dans la plaque-support et conformé aux dimensions de pourtour de la bande réfléchissante.

4. Procédé de fabrication de plaques minéralogiques selon la revendication 3, caractérisé en ce que ledit logement (13) est issu de semi-découpe.

5. Procédé de fabrication de plaques minéralogiques selon la revendication 3, caractérisé en ce que le logement (13) est obtenu par un procédé de formage du bord par emboutissage de la plaque-support.

6. Procédé de fabrication de plaques minéralogiques selon l'une des revendications 3 à 5, caractérisé en ce que lesdits logements (11, 13) de la plaque fine (5) sont centrés l'un par rapport à l'autre et par rapport à la plaque-support (3).

7. Procédé de fabrication de plaques minéralogiques selon l'une des revendications précédentes, caractérisé en ce qu'il consiste en un procédé en continu où les plaques-supports (3) et plaque fines de surface (5) sont issues de deux lignes de fabrication parallèles distinctes qui se rejoignent à l'assemblage de la plaque fine sur la plaque-support.

8. Plaque obtenue par la mise en oeuvre du procédé défini selon l'une des revendications précédentes, caractérisée en ce qu'elle comporte une plaque-support (3) et une plaque fine de surface (5) constituée elle-même par un corps mince (7) revêtu d'une bande réfléchissante adhésive (9) dépassant extérieurement du corps mince, la plaque-support comprenant deux logements internes (11, 13) centrés l'un par rapport à l'autre, l'un de faible profondeur, égale à l'épaisseur du corps mince recevant le corps mince de la plaque fine et l'autre plus grand, recevant la surface adhésive (15) de la bande réfléchissante dépassant du corps mince de la plaque fine de surface.

9. Plaque minéralogique, notamment réfléchissante, caractérisée en ce qu'elle comporte une plaque-support plane (3) et une plaque fine de surface (5), cette dernière étant simplement déposée sur la plaque-support et retenue sur celle-ci par sa partie de bande réfléchissante adhésive (15) dépassant de son corps (7) et collée sur la plaque-support.

## Claims

1. Method for manufacturing registration plates, especially plates of the so-called double-plate reflectorized type characterized in that it calls upon the following steps:
- the manufacture of rough backing plates (3), cut to the dimensions of the plate to be made;
- the processing of the said plates obtained, so as to form a housing (11) for a second plate or the double slim surface plate (5) on which the characters of the plate to be made are formed in the conventional manner;
- the manufacture of the said second slim surface plates (5) cut to the dimensions of the said housing (11) formed on the backing plate, the slim plate (5) consisting of a rectangular body (7) of small thickness, made for example of aluminium, and of a reflective surface layer (9) which comes from an adhesive strip applied to the body of the slim plate, the reflective surface layer or adhesive strip (9) of the slim plate extending beyond the peripheral edge of the body, at (15), so that it can be attached to the backing plate (3) by simple external peripheral adhesion of the emerging part (15) of the reflective strip to the corresponding surface of the backing plate, the body (7) being accommodated in the housing (11) so as to constitute a plate (1) ready to be numbered before being fitted to the vehicle.

2. Method for manufacturing number plates according to Claim 1, characterized in that the backing plate (3) is part-cut according to a template equivalent to the perimeter of the body (7) of the slim plate, to a small thickness, of value substantially equal to the thickness of the slim surface plate, in that the slim plate is attached by peripheral adhesion into the backing plate in such a way that its body (7) is housed in the said housing formed as a result of the part cut.

3. Method for manufacturing number plates according to one of Claims 1 and 2, characterized in that in that the slim plate (5) thus attached by external peripheral adhesion of the reflective adhesive strip (9) to the backing plate (3) is placed in a second housing (13) formed in the backing plate and formed to the perimeter dimensions of the reflective strip.

4. Method for manufacturing number plates according to Claim 3, characterized in that the said housing (13) is a result of the part cut.

5. Method for manufacturing number plates according to Claim 3, characterized in that the housing (13) is obtained by a method of forming the edge by embossing the backing plate.

6. Method of manufacturing number plates according to one of Claims 3 to 5, characterized in that the said housings (11, 13) in the slim plate (5) are centred with respect to each other and with respect to the backing plate (3).

7. Method for manufacturing number plates according to one of the preceding claims, characterized in that it consists in a continuous method in which the backing plates (3) and the slim surface plates (5) come from two separate parallel manufacturing lines which meet where the slim plate is attached to the backing plate.

8. Plate obtained by the implementation of the method defined according to one of the preceding claims, characterized in that it includes a backing plate (3) and a slim surface plate (5) itself consisting of a thin body (7) coated with an adhesive reflective strip (9) which externally extends beyond the thin body, the backing plate comprising two internal housings (11, 13) which are centred with respect to each other, one of small depth, equal to the thickness of the thin body accommodating the thin body of the slim plate and the other, larger, accommodating the adhesive surface (15) of the reflective strip extending beyond the thin body of the slim surface plate.

9. Number plate, especially a reflective one, characterized in that it includes a flat backing plate (3) and a slim surface plate (5), the latter simply being laid down on the backing plate and held thereon by its adhesive reflective strip part (15) extending beyond its body (7) and stuck onto the backing plate.

## Patentansprüche

1. Verfahren zur Herstellung von Zulassungskennzeichen, insbesondere sogenannten rückstrahlenden Doppelplatten-Schildern, **dadurch gekennzeichnet**, daß es die folgenden Schritte umfaßt:
- Herstellen von rohen Trägerplatten (3), die auf die Abmessungen des herzustellenden Schildes zugeschnitten sind;
- Bearbeiten der so erhaltenen Platten zur Bildung einer Vertiefung (11) zur Aufnahme einer zweiten Platte oder der doppelten dünnen Oberflächenplatte (5), auf welcher die Zeichen des herzustellenden Schildes in herkömmlicher Weise gebildet werden;
- Herstellen der auf die Abmessungen der auf der Trägerplatte gebildeten Vertiefung (11) zugeschnittenen zweiten dünnen Oberflächenplatten (5), wobei die dünne Platte (5) aus einem rechteckigen Hauptteil (7) von geringer Stärke, beispielsweise aus Aluminium, und einer reflektierenden Oberflächenschicht (9) besteht, welche von einem auf das Hauptteil der dünnen Platte aufgelegten Klebstreifen kommt, wobei die reflektierende Oberflächenschicht (9) bzw. der reflektierende Klebstreifen der dünnen Platte über den peripheren Rand des Hauptteils so übersteht (bei 15), daß durch einfaches Aufkleben des äußeren Umfangs des überstehenden Abschnitts (15) des reflektierenden Streifens auf die entsprechende Fläche der Trägerplatte auf der Trägerplatte (3) montiert werden kann, und wobei das Hauptteil (7) so in der Vertiefung (11) aufgenommen wird, daß ein Schild (1) entsteht, das zur Anbringung des Kennzeichens vor Montage auf dem Fahrzeug bereit ist.

2. Verfahren zur Herstellung von Nummernschildern nach Anspruch 1, **dadurch gekennzeichnet**, daß eine Halbstanzung der Trägerplatte (3) nach Schablone, die dem Umfang des Hauptteils (7) der dünnen Platte entspricht, und in einer geringen Stärke, deren Wert im wesentlichen gleich der Stärke der dünnen Oberflächenplatte ist, vorgenommen wird, und daß die dünne Platte durch Verklebung im Umfang so in die Trägerplatte eingefügt wird, daß ihr Hauptteil (7) in der bei der Halbstanzung gebildeten Vertiefung aufgenommen ist.

3. Verfahren zur Herstellung von Nummernschildern nach einem der Ansprüche 1 und 2, **dadurch gekennzeichnet**, daß die so durch Aufkleben des reflektierenden Klebstreifens (9) am äußeren Umfang auf die Trägerplatte (3) verbundene dünne Platte (5) in eine zweite Vertiefung (13) eingesetzt wird, die in der Trägerplatte ausgebildet und an die Abmessungen des Umfangs des reflektierenden Streifens angepaßt ist.

4. Verfahren zur Herstellung von Nummernschildern nach Anspruch 3, **dadurch gekennzeichnet**, daß die Vertiefung (13) durch Halbstanzung gebildet wird.

5. Verfahren zur Herstellung von Nummernschildern nach Anspruch 3, **dadurch gekennzeichnet**, daß die Vertiefung (13) durch ein Verfahren zur Formung des Randes durch Tiefziehen der Trägerplatte gebildet wird.

6. Verfahren zur Herstellung von Nummernschildern nach einem der Ansprüche 3 bis 5, **dadurch gekennzeichnet**, daß die Vertiefungen (11, 13) in der dünnen Platte (5) bezüglich zueinander und bezüglich der Trägerplatte (3) zentriert sind.

7. Verfahren zur Herstellung von Nummernschildern nach einem der vorhergehenden Ansprüche, **dadurch gekennzeichnet**, daß es aus einem kontinuierlichen Vorgang besteht, bei welchem die Trägerplatten (3) und die dünnen Oberflächenplatten (5) von zwei getrennten parallelen Fertigungsstraßen kommen, die zur Verbindung der dünnen Platte auf der Trägerplatte zusammengeführt werden.

8. Schild, hergestellt durch die Ausführung des Verfahrens nach einem der vorhergehenden Ansprüche, **dadurch gekennzeichnet**, daß es eine Trägerplatte (3) und eine dünne Oberflächenplatte (5) aufweist, die ihrerseits aus einem feinen Hauptteil (7) besteht, das mit einem außen über das feine Hauptteil überstehenden reflektierenden Klebstreifen (9) beschichtet ist, wobei die Trägerplatte zwei zueinander zentrierte innenliegende Vertiefungen (11, 13) aufweist, wovon die eine eine geringe Tiefe gleich der Stärke des feinen Hauptteils zur Aufnahme des feinen Hauptteils der dünnen Platte besitzt und die andere größer ist und die Klebfläche (15) des über das feine Hauptteil der dünnen Oberflächenplatte überstehenden reflektierenden Streifens aufnimmt.

9. Nummernschild, insbesondere reflektierendes Nummernschild, **dadurch gekennzeichnet**, daß es eine ebene Trägerplatte (3) und eine dünne Oberflächenplatte (5) aufweist, wobei die letztere einfach auf die Trägerplatte aufgelegt und auf dieser durch seinen reflektierenden Klebstreifenabschnitt (15) gehalten ist, der über ihr Haupt (7) übersteht und auf die Trägerplatte aufgeklebt ist.
